# EUROPEAN PATENT APPLICATION

(11) **EP 4 559 530 A1**
(43) Date of publication of application: **28.05.2025**
(21) Application number: 23211552.7
(22) Date of filing: 22.11.2023
(51) Int. Cl.: A62B 7/02, A62B 9/02, B63C 11/22, A62B 7/04

(54) **FIRST STAGE PRESSURE REDUCER**

(71) Applicant: Dräger Safety AG & Co. KGaA, 23560 Lübeck (DE)
(72) Inventor: FARNABY, James Andrew, Newcastle upon Tyne, NE3 5QL (GB); LAGEAT, Emilie, Morpeth, NE6 5BB (GB)
(74) Representative: Haseltine Lake Kempner LLP

(57) **Abstract**

There is disclosed a first stage pressure reducer (20) for a breathing apparatus comprising: a body (210) defining a cavity (211), the cavity (211) having a higher-pressure region (212) configured to receive higher-pressure gas from a gas source, a lower-pressure region (214) configured to receive lower-pressure gas from the higher-pressure region (212), and a piston bore (260), the piston bore (260) connecting the higher-pressure region (212) and the lower-pressure region (214); a piston (220) configured to move reciprocally through the piston bore (260), and further configured to transfer gas from the higher-pressure region (212) to the lower-pressure region (214); a bushing (240) disposed coaxially with the piston bore (260) and around at least a portion of the piston (220), the bushing (240) arranged to engage the piston (220) and inhibit contact between the piston (220) and the piston bore (260); and a sealing element (230) arranged between the higher-pressure region (212) and the bushing (240), the sealing element (230) configured to isolate the bushing (240) from the higher-pressure region (212). Also disclosed is a self-contained breathing apparatus comprising a first stage pressure reducer (20).

## Description

### Background

Self-contained breathing apparatus (SCBA) must be capable of performing reliably in a wide range of environments, including at both high and low temperatures. Therefore, each component of such SCBA systems must be capable of operating in a wide range of temperatures. SCBA systems typically include a pressurised breathing gas tank, a first stage pressure reducer, a second stage pressure reducer, and a demand regulator. Breathing gas is stored in the tank at a high pressure, such as 30 MPa. This high-pressure gas cannot be directly breathed in by a user, therefore the first stage pressure reducer is used to reduce the pressure to an intermediate pressure of around 1 MPa. The second stage pressure reducer then reduces this intermediate pressure further to a pressure safe for breathing by the user through the demand regulator.

In addition to the often extremely cold environmental conditions to which SCBA systems are subject, the expansion (i.e., reduction of pressure) of breathing gas in the first stage pressure reducer causes a significant degree of adiabatic cooling. These adiabatic and environmental cooling factors, whether occurring individually or in combination, result in extreme cooling of the components inside the first stage pressure reducer. This extreme cooling of the reducer components can result in reliability and therefore safety issues.

There exists a need for a new pressure reducer mechanism which decouples the effect of adiabatic cooling from the performance of the pressure reducer mechanism, thereby improving reliability and safety.

### Summary

In a first aspect, there is provided a first stage pressure reducer for a breathing apparatus comprising: a body defining a cavity, the cavity having a higher-pressure region configured to receive higher-pressure gas from a gas source, a lower-pressure region configured to receive lower-pressure gas from the higher-pressure region, and a piston bore, the piston bore connecting the higher-pressure region and the lower-pressure region; a piston configured to move reciprocally through the piston bore, and further configured to transfer gas from the higher-pressure region to the lower-pressure region; a bushing disposed coaxially with the piston bore and around at least a portion of the piston, the bushing arranged to engage the piston and inhibit contact between the piston and the piston bore; and a sealing element arranged between the higher-pressure region and the bushing, the sealing element configured to isolate the bushing from the higher-pressure region.

The bushing may be disposed inside, at the internal surface of the piston bore. The sealing element may be configured to inhibit a fluid ingress flow from the higher-pressure region along an ingress path, thereby inhibiting the fluid from contacting the bushing. The ingress path may be defined as being between an external surface of the piston and the internal surface of the piston bore.

The bushing may be a single annular component or may comprise a plurality of individual components which cooperate to engage the piston inside the piston bore. Such individual components may be disposed evenly around the piston bore.

The higher-pressure region is configured to contain gas at a higher pressure than the lower-pressure region. The higher-pressure region may be a high-pressure region, which contains gas at substantially the same pressure as the pressure of the gas source. The lower-pressure region may be a medium pressure region, which contains gas at an intermediate pressure lower than the higher-pressure region, but above a delivery pressure of the gas to a user. The gas source may be a pressurised breathing gas cylinder or tank.

The sealing element may inhibit the fluid in the higher-pressure region from imparting a longitudinal force onto the bushing with respect to the piston bore. Accordingly, the resultant longitudinal forces acting on the bushing due to hydrostatic pressure may be zero or close to zero.

The bushing may have an internal diameter smaller than a smallest internal diameter of the piston bore, thereby causing a separation between the external surface of the piston and the internal surface of the piston bore.

The piston bore may comprise a first section proximate to the higher-pressure region and may comprise a second section proximate to the lower-pressure region, the second section optionally having a larger diameter than the first section, and wherein a shoulder may be formed between the first and second sections.

The bushing may be disposed in the second section and a first end of the bushing may abut the shoulder of the piston bore, thereby inhibiting a movement of the bushing in a first direction, towards the higher-pressure region.

The first stage pressure reducer may further comprise a retaining element arranged at a second end of the bushing, opposite the first end, the retaining element may thereby inhibit a movement of the bushing in a second direction, towards the lower-pressure region. The retaining element may comprise a washer, and optionally the washer may be secured to the body by a circlip. The retaining element may comprise a cutout or passage configured to allow transmission of fluid past the retaining element. The bushing may be retained in the body by a press fit into the piston bore.

The bushing may comprise one or more longitudinally-extending grooves the one or more longitudinal grooves optionally being configured to permit the transmission of fluid past the bushing. The longitudinal grooves may permit fluid from the higher-pressure region to flow into the lower-pressure region in the event of a failure of the sealing element. The failure of the sealing element may be a partial or total failure.

The bushing may be formed of a polymer or metal material, or a material comprising polymer and metal. The bushing may be formed of PTFE or metal filled PTFE, optionally bronze filled PTFE. The bushing may be formed of a material with a thermal coefficient of expansion of between 10×10⁻⁶ K⁻¹ and 100×10⁻⁶ K⁻¹, optionally between 10×10⁻⁶ K⁻¹ and 60×10⁻⁶ K⁻¹, or further optionally between 20×10⁻⁶ K⁻¹ and 55×10⁻⁶ K⁻¹. The expansion of gas in the pressure reducer may cause a wide range of temperatures and therefore thermal expansion coefficients in the aforementioned ranges may provide good dimensional tolerancing over the differing operating temperatures that the system may experience.

A distance between an internal surface of the bushing and the external surface of the piston may be between 0.01 mm and 0.1 mm, optionally between 0.01 mm and 0.09 mm. The distance between the internal surface of the bushing and the external surface of the piston may be, at least partially, determined by the external diameter of the piston and the internal diameter of the bushing. These dimensions may provide a particularly good balance of freedom of movement of the piston while restraining excessive lateral movement.

The piston may be configured to move reciprocally between an open position and a closed position, the open position corresponding to a state whereby gas is permitted to flow from the higher-pressure region to the lower-pressure region via an internal bore of the piston, and the closed position corresponding to a state whereby gas is inhibited from flowing from the higher-pressure region to the lower-pressure region via the internal bore; the piston may be configured to move from the open position to the closed position when a pressure differential between the higher-pressure region and the lower-pressure region falls below a lower threshold; and the piston may be configured to move from the closed position to the open position when the pressure differential between the higher-pressure region and the lower-pressure region rises above an upper threshold. In use, the user will inhale periodically. The inhaled gas is provided from the lower-pressure region (optionally via a further 'second stage' pressure reducer. Each inhalation will deplete the gas (or a portion thereof) in the lower-pressure region and thereby decrease the pressure in the lower-pressure region. Once the user has taken an inhalation (or a sufficient number of inhalations), the pressure in the lower pressure region may fall low enough that the pressure differential rises above the upper threshold, and the piston may then move to the open position, in order to allow higher-pressure gas from the higher-pressure region to move into the lower-pressure region to replenish the lower pressure region. Once sufficient gas has transferred into the lower-pressure region, the pressure differential will then fall below the lower threshold, and the piston will move to the closed position. The user will then inhale, repeating this cycle.

The speed at which the piston reciprocates between the open and closed positions may vary depending on the breathing demands of the user.

The piston may comprise a tail, in which the internal bore is located, and a head connected to the tail. In the open position, higher-pressure gas may flow through the internal bore, into the head where it may exit into the lower-pressure region via an outlet in the head.

When the piston moves to the closed position, the head of the piston may move to enclose (inside a cavity of the head) a plunger which is in communication with the body. The plunger may comprise a distal sealing end which, in the closed position, may seal against a neck of the internal bore, thereby inhibiting higher-pressure gas transferring from the internal bore to the head of the piston and on to the lower-pressure region.

A biasing element such as a spring may be disposed between the piston head and the body and may be configured so as to urge the piston to move from the closed position to the open position when the pressure differential rises above the upper threshold. When the pressure differential falls below the lower threshold, the spring may be compressed against the body by the force of the gas inside the lower-pressure region acting on piston.

The biasing of the biasing element (e.g., the force applied by the spring) may be adjustable by varying a position of the plunger relative to the body. Adjustment of the plunger position (such as the distance between the body and the plunger) may be achieved by rotation of a grub screw, optionally a captive grub screw.

The gradual, discrete introduction of higher-pressure breathing gas into the lower-pressure region may cause the introduced higher-pressure breathing gas to expand in the lower-pressure region, thereby causing the pressure to decrease to that of a pressure between the pressure of the higher-pressure region and the lower pressure region (before the introduction of the higher-pressure breathing gas). Resultingly, the pressure of breathing gas flowing through the first stage pressure reducer may be reduced.

In a further aspect, there is provided a self-contained breathing apparatus comprising a first stage pressure reducer as described above.

### Brief Description of the Drawings

Arrangements of the invention will now be described, by way of example, and with reference to the accompanying drawings, in which:
Figure 1 shows a cross sectional view of a first stage pressure reducer known previously;
Figure 2A shows a cross sectional view of a first stage pressure reducer in accordance with the present invention;
Figure 2B shows an enlarged view of one section of the view shown in Figure 2A;
Figure 3A shows a perspective view of a bushing according to the present invention; and
Figure 3B shows a cross sectional view of the first stage pressure reducer according to the present invention.

### Detailed Description of the Drawings

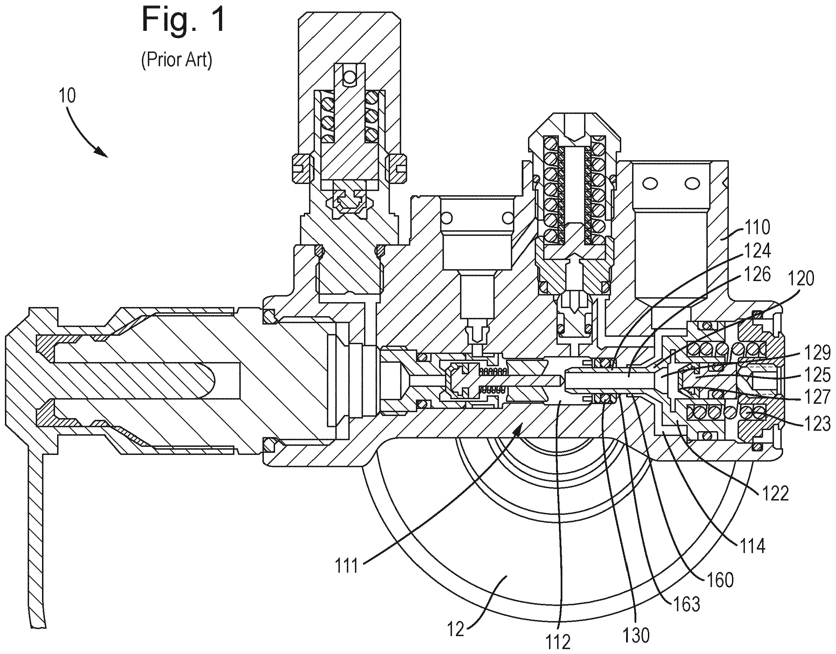

With reference to **Figure 1****,** an example of a known first stage pressure reducer 10 is shown. The first stage pressure reducer 10 comprises a body 110 which defines a cavity 111. The cavity 111 has a higher-pressure region 112, a lower-pressure region 114 and a piston bore 160. The higher- and lower-pressure regions 112, 114 are fluidly connected by the piston bore 160. The body 110 connects to pressurised breathing gas supply such as a pressurised breathing gas tank 12 via a connector (not shown) which enables the higher-pressure region 112 to receive higher-pressure breathing gas from the tank 12. The lower-pressure region 114 is configured to receive lower-pressure breathing gas from the higher-pressure region 112 via the piston bore 160. The lower-pressure breathing gas is generally at a lower pressure than the higher-pressure breathing gas but at a higher pressure than user-deliverable breathing gas. This breathing gas may be referred to as either intermediate-pressure breathing gas or lower-pressure breathing gas.

Typically, the breathing gas inside the tank 12 and therefore the higher-pressure region is pressurised to between 10 and 40 MPa, often around 30 MPa. Before the lower-pressure region 114 receives this breathing gas, the pressure of the breathing gas must be reduced.

A piston 120, comprising a head 122 and a tail 124 is disposed inside the body 110. The piston head 122 is located primarily inside the lower-pressure region 114, while the piston tail 124 is located primarily inside the higher-pressure region 112 and the piston bore 160.

The piston 120 is used to reduce the pressure of the higher-pressure breathing gas as the breathing gas enters the lower-pressure region 114, thereby providing the lower-pressure region 114 with lower-pressure (intermediate-pressure) breathing gas. Starting from an "open" position of the piston 120, higher-pressure breathing gas flows from the higher-pressure region 112 through an internal bore 126 of the piston tail 124 and into the piston head 122, where the gas enters the lower-pressure region 114 via an outlet (not shown) in the piston head 122. The introduction of this higher-pressure gas causes the pressure in the lower-pressure region 114 to increase and begin to push on the piston head 122, causing the piston 120 to move in a way that expands the volume of the lower-pressure region 114. From the perspective of Figure 1, the piston 120 moves in a direction away from the higher-pressure region 112. Resultingly, the spring 123 is compressed until a distal sealing end 127 of a plunger 125 blocks a neck 129 of the internal bore 126 at an interface between the internal bore 126 and the head 122.

Once the neck 129 is blocked, the higher-pressure breathing gas in the higher-pressure region 112 is prevented from flowing through the internal bore 126, into the lower-pressure region 114. This state corresponds to a "closed" position of the piston 120. As the user consumes the breathing gas in the lower-pressure region 114 (via a second stage pressure reducer and/or a demand regulator, not shown) the pressure inside the lower-pressure region 114 drops, causing the force acting on the piston head 122 to reduce. The spring 123 therefore returns the piston 120 back to the "open" position, thereby resetting the position of the piston 120.

A sealing element 130 inhibits breathing gas from flowing, along an ingress path 163 defined as between the piston tail 124 and the piston bore 160, from the higher-pressure region 112 to the lower-pressure region 114. The sealing element 130 also guides the tail 124 by centring the tail 124 inside the piston bore 160.

The movement between the open and closed positions repeats according to user breathing gas demand, causing the piston 120 to move reciprocally through the piston bore 160, for as long as there is sufficient breathing gas in the tank 12. In particular, the tail 124 moves reciprocally through the piston bore 160 while the head 122 moves reciprocally inside the lower-pressure region 114. The discrete transfer of higher-pressure gas from the higher-pressure region 112 to the lower-pressure region 114, where the higher-pressure gas is able to expand (and thereby decrease in pressure), is what results in the controlled pressure reduction of the breathing gas.

During this process, the expansion of the higher-pressure breathing gas causes significant adiabatic cooling. As a result, many of the components including the body 110 and cavity 111, the piston 120, the piston bore 160, and the sealing element 130 become extremely cold. This cooling may be in addition to any environmental cooling effects resulting from the conditions in which the device is used. Some components therefore undergo a degree of thermal contraction, which can result in the centring of the tail 124 inside the piston bore 160 by the sealing element 130 becoming less effective. This reduction in effectiveness can cause jamming of the piston 120 inside the piston bore 160 due to the tolerances between the components changing.

As noted above, the sealing element 130 is also responsible for retaining the higher-pressure breathing gas in the higher-pressure region 112 to which it is adjacent. Any contraction of the sealing element 130 due to low temperatures can impede the ability for the sealing element 130 to perform both functions of retaining the higher-pressure gas and guiding the tail 124 simultaneously.

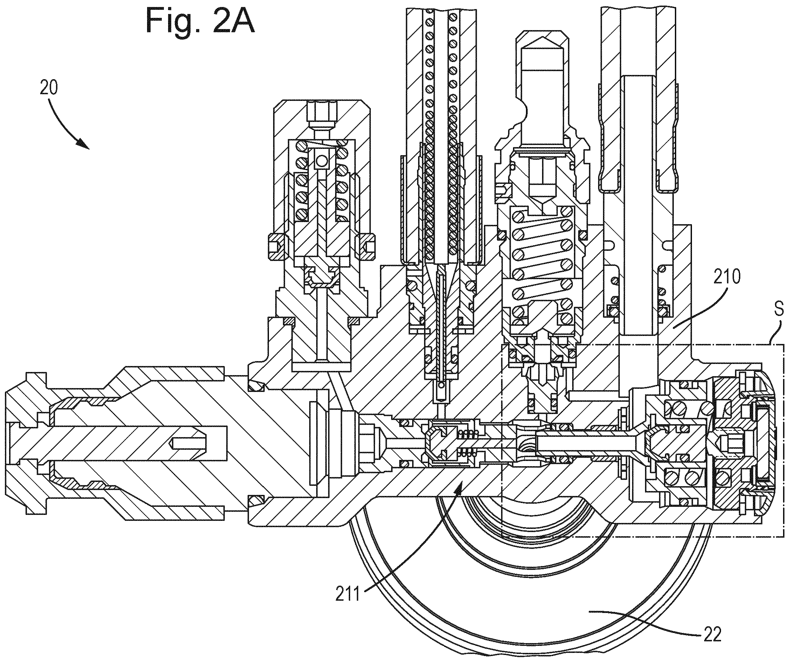

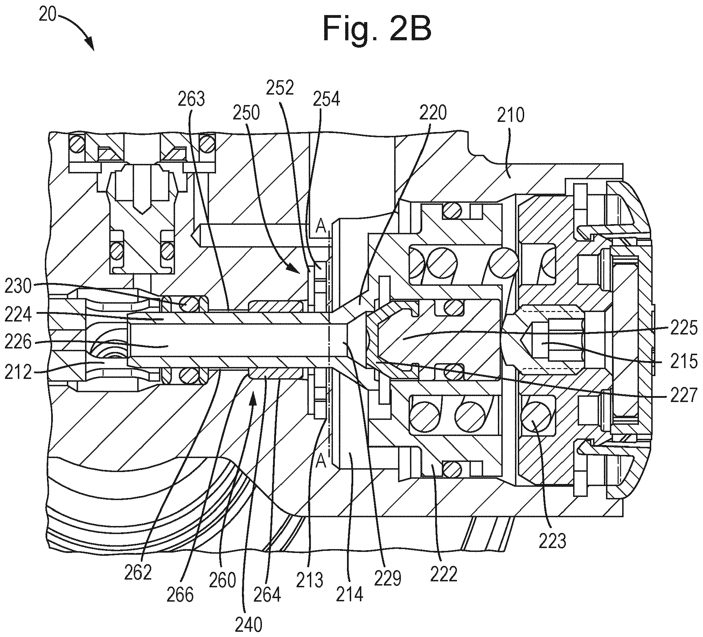

**Figure 2A** shows a cross sectional view of an embodiment of a first stage pressure reducer 20 according to the present invention. A section view S marked on Figure 2A is shown in more detail in **Figure 2B****.** Like components between the reducer 10 and the inventive reducer 20 are marked with like reference numerals, incremented by 100. The first stage pressure reducer 20 comprises a body 210 defining a cavity 211. The cavity 211 has a higher-pressure region 212, a lower-pressure region 214, and a piston bore 260. The first stage pressure reducer 20 also comprises a piston 220 with a head 222 and tail 224 which moves reciprocally inside the body 210 similarly to the piston 120 of the known first stage pressure reducer 10. A sealing element 230 is also provided to retain the higher-pressure breathing gas in the higher-pressure region 212. The first stage pressure reducer 20 may also comprise a grub screw 215 which can be rotated to alter the position of the plunger 225, thereby altering the pressure thresholds at which the plunger 220 moves from the open to the closed position and vice versa.

The first stage pressure reducer 20 shown in Figures 2A and 2B also includes a bushing 240. The bushing 240 is an annular shape and is disposed coaxially with the piston bore 260 and around at least a portion of the piston 220, particularly the piston tail 224. The bushing 240 engages the piston 220 and serves to guide the piston tail 224 through piston bore 260 during each reciprocal movement of the piston 220 while also ensuring a separation between the piston tail 224 and the piston bore 260 is maintained. In the embodiment shown, the piston bore 260 comprises a first, narrow section 262 closer to the higher-pressure region 212 and a second, wider section 264 closer to the lower-pressure region 214. Between the two sections 262, 264, a shoulder 266 is formed. In this embodiment, the bushing 240 is seated in the wider section 264 and abuts the shoulder 266 on one side, resulting in any movement of the bushing 240 towards the higher-pressure region 212 being prevented.

The bushing 240 has an external diameter approximately equal to the internal diameter of the wider section 264, thereby causing the bushing 240 to fit snugly inside the wider section 264, inhibiting lateral movement of the bushing 240 inside the piston bore 260. The internal diameter of the bushing is smaller than the smallest internal diameter of the piston bore 260 (i.e., smaller than the diameter of the narrow section 262), therefore the internal surface of the bushing 240 is radially closer to a central axis of the piston bore 260 than the surface of the narrow section 262. In other words, the thickness of the bushing 240 (the difference between the external and internal diameters of the bushing 240) is greater than the height of the shoulder 266. As a result, the tail 224 is held centred in the piston bore 260, separated from the surface of the narrow section 262. This prevents the tail 224 from contacting any part of the piston bore 260 (particularly the surface of the narrow section 262) and therefore reduces the likelihood of the piston 220 jamming.

In some embodiments, the piston bore comprises only one section of a constant diameter. In these cases, the bushing is disposed at the internal surface of the piston bore and the internal diameter of the bushing is smaller than the internal diameter of the piston bore. In some embodiments, the piston bore comprises a conical shape, with a narrower end towards the higher-pressure region. In these embodiments, a frustoconical bushing may be disposed inside the conical piston bore.

In some embodiments, the bushing comprises one or more discrete bushing sections rather than a single continuous annular part. In these embodiments, the bushing sections may be disposed evenly around the internal diameter of the piston bore.

In some embodiments, the body 210 and the piston 220 are formed of metal (either the same type or different types), and in particular one or both of them may be formed of brass. In some embodiments, each of the body 210 and the piston 220 are also coated in a different metal, optionally nickel, either by electrolytic deposition or by any other appropriate method. The bushing 240 may be formed of metal, particularly brass, or may be formed of a polymer. If the bushing 240 is formed of a polymer, polytetrafluoroethylene (PTFE) may be used. In some embodiments, metal filled PTFE such as bronze filled PTFE is used. In such embodiments, the ratio of PTFE to bronze may be 60:40. The ratio may be a ratio by weight. Although, in other embodiments, a different ratio may be used. The material (or mixture of materials) selected to form the bushing 240 is, at least partially, determined by the material or materials used to form the body 210 and the piston 220 or vice versa. The coefficient of thermal expansion of the bushing 240 must compliment those of the body 210 and the piston 220 to ensure that a separation is always maintained by the bushing 240 between the piston bore 260 and the tail 224 of the piston 220 throughout the full range of operation temperatures (generally -110°C - +100°C) of the reducer 20.

During normal operation, the clearance between the tail 224 and the piston bore 260 is between 0.01 mm and 0.09 mm (given a nominal average diameter between the tail 224 and the piston bore 260 of 6mm, and depending on whether a free running or close running fit is selected). In alternative embodiments with larger or smaller nominal average diameters the required clearance is larger or smaller, respectively. Such clearance values generally follow the ASME B4.2 - 1978 standard for "free running" or "close running" applications. In some embodiments, the bushing is formed of a material with a thermal coefficient of expansion of between 10×10⁻⁶ K⁻¹ and 100×10⁻⁶ K⁻¹.

In embodiments according to this invention, the bushing 240 is disposed behind the sealing element 230 (relative to the higher-pressure region 212). Therefore, the sealing element isolates the higher-pressure breathing gas in the higher-pressure region 212 from the bushing 240. The sealing element 230 therefore inhibits the higher-pressure breathing gas from imparting a longitudinal force onto the bushing 240 with respect to the piston bore 260. Accordingly, the resultant longitudinal forces acting on the bushing 240 due to hydrostatic pressure may be zero or close to zero. The likelihood of the bushing 240 being dislodged is therefore reduced. The pressure inside the higher-pressure region 212 is variable over time as the breathing gas is consumed by the user. As the sealing element 230 prevents force from the higher-pressure breathing gas being imparted onto the bushing 240, this variation of pressure does not impact the operation of the bushing 240. As a result, the likelihood of jamming of the piston 260 due to cold temperature contraction is reduced.

In this embodiment, the bushing 240 is press fit into the piston bore 260, however in other embodiments, the bushing 240 may be screwed in or adhered in place. As shown, in some embodiments a retaining element 250 is used to prevent the bushing 240 from moving away from the shoulder 266 and out of the piston bore 260. If the bushing 240 has been press fit, or otherwise secured into place, the retaining element 250 generally acts as a failsafe to prevent movement of the bushing 240 in the event that the bushing 240 comes loose.

The retaining element 250 generally comprises a washer 252 and a circlip 254. The washer 252 is arranged at an end of the bushing 240 opposite the end contacting the shoulder 266. Therefore, movement of the bushing 240 is inhibited in both axial directions. The tail 224 of the piston 220 is able to move through the washer 252 and circlip 254 unimpeded. In the embodiment shown, the circlip 254 is an internal circlip 254 which fits into a groove 213 in the body 210. The washer 252 is positioned between the bushing 240 and the circlip 254, thus preventing the washer 252 from falling out.

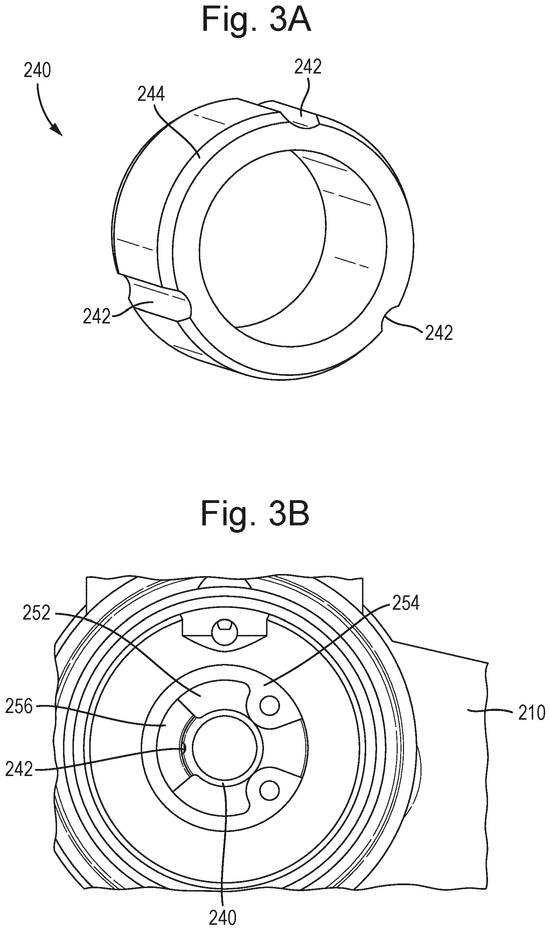

Under some conditions, for instance beyond safe operating temperatures or after long periods without maintenance, the sealing element 230 may begin to fail. If such a failure occurs, higher-pressure breathing gas may begin to flow from the higher-pressure region 212 into the lower-pressure region 214 via the ingress path 263. To safely allow for this failure mode, and to prevent the higher-pressure breathing gas from potentially causing further damage, the bushing 240 comprises longitudinally extending grooves 242 (as shown in **Figure 3A****).** These longitudinal grooves 242 permit any higher-pressure breathing gas which passes the sealing element 230 to also safely pass the bushing 240 without causing the bushing 240 to be pushed out of position, leading to more damage. In normal operation, the longitudinal grooves are not in use. The bushing 240 may further comprise a chamfer 244 to aid with installation of the bushing 240 into the piston bore 260.

**Figure 3B** shows a cross sectional view along the line marked A-A in Figure 2B. In this embodiment, the washer 252 comprises a cut out 256 which both allows easy removal of the circlip 254 and allows any higher-pressure breathing gas which passes the sealing element 230 and flows through the longitudinal grooves 242 of the bushing 240 to escape out into the lower-pressure region 214.

It will be appreciated by those skilled in the art that although the invention has been described by way of example, and with reference to one or more exemplary embodiments, it is not limited to the disclosed examples and alternative examples could be constructed without departing from the scope of the invention as defined by the appended claims.

## Claims

1. A first stage pressure reducer (20) for a breathing apparatus comprising:
a body (210) defining a cavity (211), the cavity (211) having a higher-pressure region (212) configured to receive higher-pressure gas from a gas source (22), a lower-pressure region (214) configured to receive lower-pressure gas from the higher-pressure region (212), and a piston bore (260), the piston bore (260) connecting the higher-pressure region (212) and the lower-pressure region (214);
a piston (220) configured to move reciprocally through the piston bore (260), and further configured to transfer gas from the higher-pressure region (212) to the lower-pressure region (214);
a bushing (240) disposed coaxially with the piston bore (260) and around at least a portion of the piston (220), the bushing (240) arranged to engage the piston (220) and inhibit contact between the piston (220) and the piston bore (260); and
a sealing element (230) arranged between the higher-pressure region (212) and the bushing (240), the sealing element (230) configured to isolate the bushing (240) from the higher-pressure region (212).

2. The first stage pressure reducer (20) according to claim 1, wherein the bushing (240) has an internal diameter smaller than a smallest internal diameter of the piston bore (260), thereby causing a separation between the external surface of the piston (220) and the internal surface of the piston bore (260).

3. The first stage pressure reducer (20) according any one of the preceding claims, wherein the piston bore (260) comprises a first section (262) proximate to the higher-pressure region (212) and a second section (264) proximate to the lower-pressure region (214), the second section (264) having a larger diameter than the first section (262), and wherein a shoulder (266) is formed between the first and second sections (262, 264).

4. The first stage pressure reducer (20) according to claim 3, wherein the bushing (240) is disposed in the second section (264) and a first end of the bushing (240) abuts the shoulder (266) of the piston bore (260), thereby inhibiting a movement of the bushing (240) in a first direction, towards the higher-pressure region (212).

5. The first stage pressure reducer (20) according to claim 4, further comprising a retaining element (250) arranged at a second end of the bushing (240), opposite the first end, the retaining element (250) thereby inhibiting a movement of the bushing (240) in a second direction, towards the lower-pressure region (214).

6. The first stage pressure reducer (20) according to claim 5, wherein the retaining element (250) comprises a washer (252), and wherein optionally the washer (252) is secured to the body (210) by a circlip (254).

7. The first stage pressure reducer (20) according to claim 5 or 6, wherein the retaining element (250) comprises a cutout or passage (256) configured to allow transmission of fluid past the retaining element (250).

8. The first stage pressure reducer (20) according to any one of the preceding claims, wherein the bushing (240) comprises one or more longitudinally-extending grooves (242) the one or more longitudinal grooves (242) being configured to permit the transmission of fluid past the bushing (240).

9. The first stage pressure reducer (20) according to any one of the preceding claims, wherein the bushing (240) is formed of a polymer or metal material.

10. The first stage pressure reducer (20) according to any one of claims 1 - 8, wherein the bushing is formed of PTFE or metal filled PTFE, optionally bronze filled PTFE.

11. The first stage pressure reducer (20) according to any one of claims 1 - 8, wherein the bushing (240) is formed of a material with a thermal coefficient of expansion of between 10×10⁻⁶ K⁻¹ and 100×10⁻⁶ K⁻¹.

12. The first stage pressure reducer (20) according to any one of the preceding claims, wherein the bushing (240) is retained in the body (210) by a press fit into the piston bore (260).

13. The first stage pressure reducer (20) according to any one of the preceding claims, wherein a distance between an internal surface of the bushing (240) and the external surface of the piston (220) is between 0.01 mm and 0.1 mm.

14. The first stage pressure reducer (20) according to any one of the preceding claims, wherein the piston (220) is configured to move reciprocally between an open position and a closed position, the open position corresponding to a state whereby gas is permitted to flow from the higher-pressure region (212) to the lower-pressure region (214) via an internal bore of the piston (220), and the closed position corresponding to a state whereby gas is inhibited from flowing from the higher-pressure region (212) to the lower-pressure region (214) via the internal bore;
the piston (220) being configured to move from the open position to the closed position when a pressure differential between the higher-pressure region (212) and the lower-pressure region (214) falls below a lower threshold; and
the piston (220) being configured to move from the closed position to the open position when the pressure differential between the higher-pressure region (212) and the lower-pressure region (214) rises above an upper threshold.

15. A self-contained breathing apparatus comprising a first stage pressure reducer (20) according to any one of the preceding claims.
